# EUROPEAN PATENT SPECIFICATION

(11) **EP 3 021 549 B1**
(45) Date of publication and mention of the grant of the patent: **28.02.2018**
(21) Application number: 15191827.3
(22) Date of filing: 28.10.2015
(51) Int. Cl.: H04L 29/06, H04L 12/741

(54) **TERMINAL AUTHENTICATION APPARATUS AND METHOD**
ENDGERÄTEAUTHENTIFIZIERUNGSVORRICHTUNG UND -VERFAHREN
APPAREIL ET PROCÉDÉ D'AUTHENTIFICATION DE TERMINAL

(30) Priority: 17.11.2014 CN 201410652814
(43) Date of publication of application: 18.05.2016
(73) Proprietor: Huawei Technologies Co. Ltd., Shenzhen, Guangdong 518129 (CN)
(72) Inventor: WANG, Ke, Shenzhen, Guangdong 518129 (CN); LI, Wei, Shenzhen, Guangdong 518129 (CN)
(74) Representative: Gill Jennings & Every LLP

(56) References cited:
- EP-A1- 2 770 689
- EP-A1- 2 922 327
- US-A1- 2009 183 252

## Description

### TECHNICAL FIELD

The present invention relates to the field of communication security, and in particular, to a terminal authentication apparatus and method.

### BACKGROUND

Many web cameras are disposed in a monitoring network.

In consideration of network security, the web cameras need to be authenticated before accessing the monitoring network. Currently, a terminal admission method is as follows: An authentication server (English: authentication server) is preset, where the authentication server saves a media access control (English: media access control; MAC for short) address list, also referred to as a whitelist (English: whitelist), of trusted web cameras. After a web camera establishes a physical connection to an authenticator, the authenticator receives a MAC address of the web camera, and then sends the MAC address to the authentication server. The authentication server detects whether the MAC address belongs to the whitelist; if the MAC address belongs to the whitelist, the authentication server sends, to the authenticator, information indicating that authentication succeeds, and the authenticator allows the web camera to access the monitoring network; and if the MAC address does not belong to the whitelist, the authentication server sends, to the authenticator, information indicating that authentication fails, and the authenticator does not allow the web camera to access the monitoring network.

Because there are a large quantity of web cameras in the monitoring network and the web cameras are frequently replaced, and many newly replaced web cameras are not in the whitelist of the authentication server but are trusted web cameras, if these web cameras are directly not allowed to access the monitoring network, normal monitoring is seriously affected. If MAC addresses of these web cameras are detected one by one and added to the whitelist of the authentication server, a workload is extremely large and operability is poor.

EP 2922327 A1 discloses using unique identification information (e.g. a card number of a SIM card or a USIM card of the user, or an Email account bound to a mobile UE of the user) of a user to determine whether a mobile terminal device being allowed to access to the WiFi hot spot.

EP2770689A1 discloses providing, by a switch, identification of the switch to a authentication server in the authentication sequence; authenticating, by the authentication server, an authentication request transmitted from a terminal; transmitting, by the authentication server, an authentication result of the authentication to the switch based on the identification information of the switch; and authenticating, by the switch, access from the terminal based on the authentication result received from the authentication server.

US 2009/0183252 A1 discloses a packet relay apparatus keeps only packets specified as authentication target packets of MAC address authentication, to reduce the number of packets to be transferred from H/W to a CPU.

### SUMMARY

To resolve problems that normal monitoring is seriously affected due to the fact that a terminal that is not in a whitelist is directly not allowed to access a monitoring network, and a workload is heavy and operability is poor if MAC addresses of these terminals are detected one by one and added to an authentication server, the present invention provide a terminal authentication apparatus and method. The present invention is defined in the attached claims.

The technical solutions provided by the present invention have the following beneficial effects:
When a MAC address of a terminal does not belong to a preset MAC address list, an authenticator sends a data stream of the terminal to a security gateway; after the security gateway detects whether the terminal is a trusted terminal, the security gateway instructs an authentication server to update a MAC address list, and after the MAC address list is updated, the authentication server sends a re-authentication indication to the authenticator, so that the authenticator re-authenticates the terminal. This resolves problems that normal monitoring is seriously affected due to the fact that a terminal that is not in a whitelist is directly not allowed to access a monitoring network, and a workload is heavy and operability is poor if MAC addresses of these terminals are detected one by one and added to the authentication server. Whether the terminal is a trusted terminal is detected according to the data stream of the terminal, the terminal accessing the monitoring network is allowed or rejected according to a detection result, and the MAC address of the terminal does not need to be manually added to the authentication server, thereby reducing the workload and enhancing the operability.

### Brief description of drawings

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a network architecture according to an embodiment of the present invention;
FIG. 2 is a structural block diagram of a terminal authentication apparatus according to an embodiment of the present invention;
FIG. 3 is a structural block diagram of a terminal authentication apparatus according to another embodiment of the present invention;
FIG. 4 is a structural block diagram of a terminal authentication apparatus according to another embodiment of the present invention;
FIG. 5 is a structural block diagram of an authenticator according to an embodiment of the present invention;
FIG. 6 is a structural block diagram of an authentication server according to an embodiment of the present invention;
FIG. 7 is a method flowchart of a terminal authentication method according to an embodiment of the present invention; and
FIG. 8 is a method flowchart of a terminal authentication method according to another embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

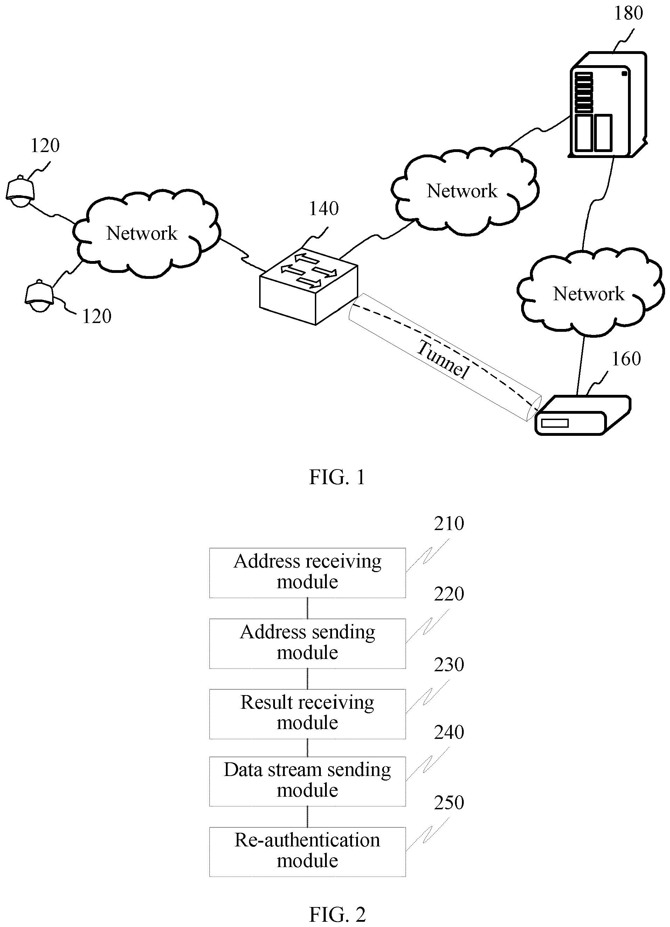

Referring to FIG. 1, which shows a schematic structural diagram of a network architecture according to an embodiment of the present invention, the implementation environment includes a terminal 120, an authenticator 140, a security gateway 160, and an authentication server 180.

The terminal 120 may be: a web camera (English: web camera), a mobile telephone (English: mobile telephone), a tablet computer (English: tablet computer), a notebook computer (English: notebook computer), a desktop computer (English: desktop computer), or the like. The terminal 120 is connected to the authenticator 140 by using a wired network or a wireless network. In this application, description is provided by using an example in which the terminal 120 is a web camera.

The authenticator (English: authenticator) 140 may be a network switch. The terminal 120 is connected to a target network by using a network access port (English: network access port) provided by the authenticator 140. The authenticator 140 may send a MAC address of the terminal 120 to the authentication server 180 for authentication, and after the authentication succeeds, allow the terminal 120 to access the target network. The authenticator 140 is connected to the security gateway 160 by using a wired network or a wireless network. The authenticator 140 is further connected to the authentication server 180 by using a wired network or a wireless network.

The security gateway 160 is configured to detect whether a data stream (English: data stream) of the terminal is trusty, and detect, according to the data stream of the terminal, whether the terminal is a trusted terminal. The security gateway 160 and the authenticator 140 are connected to each other by a wired network or a wireless network. The security gateway 160 may establish a tunnel to connect to the authenticator 140. The security gateway 160 is further connected to the authentication server 180 by a wired network or a wireless network. The data stream is a group of instructions, data packets, or packets in a process from the beginning of access to the ending of the access when the terminal 120 accesses the target network.

The authentication server 180, also referred to as a controller, is a server configured to authenticate the terminal 120 by using a preset MAC address list.

The preset MAC address list may include: a MAC address list of a trusted terminal.

Alternatively, the preset MAC address list may include: a MAC address list of an untrusted terminal.

Alternatively, the preset MAC address list may include: a MAC address list of a trusted terminal and a MAC address list of an untrusted terminal.

The MAC address list of the trusted terminal is also referred to as a whitelist; and the MAC address list of the untrusted terminal is also referred to as a blacklist.

Referring to FIG. 2, which shows a structural block diagram of a terminal authentication apparatus according to an embodiment of the present invention, the terminal authentication apparatus may be implemented to be all or a part of the authenticator in FIG. 1 by using software, hardware, or a combination thereof. The terminal authentication apparatus includes:
an address receiving module 210, configured to receive a data stream from a terminal, and acquire a MAC address of the terminal according to the data stream of the terminal;
an address sending module 220, configured to send the MAC address of the terminal to an authentication server, where the authentication server is configured to authenticate the MAC address according to a preset MAC address list;
a result receiving module 230, configured to receive an authentication result of the authentication server;
a data stream sending module 240, configured to: when the authentication result indicates that the MAC address of the terminal does not belong to the preset MAC address list in the authentication server, send the data stream of the terminal to a security gateway, where the security gateway is configured to detect, according to the data stream of the terminal, whether the terminal is a trusted terminal, and instruct, according to a detection result, the authentication server to update the MAC address list; and
a re-authentication module 250, configured to receive a re-authentication indication that is sent by the authentication server and carries the MAC address of the terminal, and re-authenticate the terminal according to the re-authentication indication.

To sum up, in the terminal authentication apparatus provided in this embodiment, when a MAC address of a terminal does not belong to a preset MAC address list, an authenticator sends a data stream of the terminal to a security gateway; after the security gateway detects whether the terminal is a trusted terminal, the security gateway instructs an authentication server to update a MAC address list, and after the MAC address list is updated, the authentication server sends a re-authentication indication to the authenticator, so that the authenticator re-authenticates the terminal. This resolves problems that normal monitoring is seriously affected due to the fact that a terminal that is not in a whitelist is directly not allowed to access a monitoring network, and a workload is heavy and operability is poor if MAC addresses of these terminals are detected one by one and added to the authentication server. Whether the terminal is a trusted terminal is detected according to the data stream of the terminal, the terminal accessing the monitoring network is allowed or rejected according to a detection result, and the MAC address of the terminal does not need to be manually added to the authentication server, thereby reducing the workload and enhancing the operability.

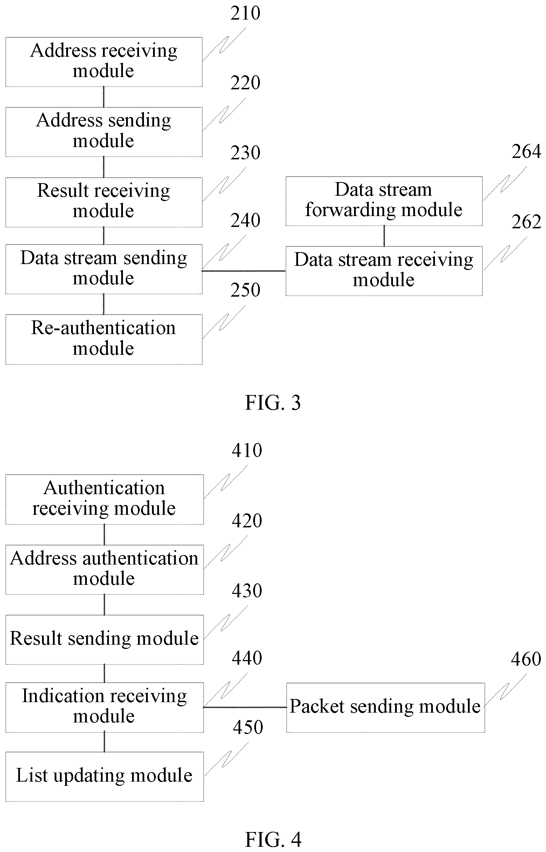

Referring to FIG. 3, which shows a structural block diagram of a terminal authentication apparatus according to an embodiment of the present invention, the terminal authentication apparatus may be implemented to be all or a part of the authenticator in FIG. 1 by using software, hardware, or a combination thereof. The terminal authentication apparatus includes:
an address receiving module 210, configured to receive a data stream from a terminal, and acquire a MAC address of the terminal according to the data stream of the terminal;
an address sending module 220, configured to send the MAC address of the terminal to an authentication server, where the authentication server is configured to authenticate the MAC address according to a preset MAC address list;
a result receiving module 230, configured to receive an authentication result of the authentication server;
a data stream sending module 240, configured to: when the authentication result indicates that the MAC address of the terminal does not belong to the preset MAC address list in the authentication server, send the data stream of the terminal to a security gateway, where the security gateway is configured to detect, according to the data stream of the terminal, whether the terminal is a trusted terminal, and instruct, according to a detection result, the authentication server to update the MAC address list; and
a re-authentication module 250, configured to receive a re-authentication indication that is sent by the authentication server and carries the MAC address of the terminal, and re-authenticate the terminal according to the re-authentication indication.

In a possible implementation manner, the re-authentication module 250 is configured to receive a first indication that is sent by the authentication server and carries the MAC address of the terminal, where the first indication is used to instruct to restart a network access port corresponding to the MAC address of the terminal; after the network access port is restarted, receive again the data stream of the terminal, and acquire the MAC address of the terminal according to the data stream; and resend the MAC address of the terminal to the authentication server for authentication.

In another possible implementation manner, the re-authentication module 250 is configured to receive a second indication that is sent by the authentication server and carries the MAC address of the terminal, where the second indication is used to instruct to cut off a connection corresponding to the MAC address; after the connection is cut off, receive again the data stream from the terminal, and acquire the MAC address of the terminal according to the data stream; and send the MAC address of the terminal to the authentication server for re-authentication.

In still another possible implementation manner, the apparatus further includes:
a data stream receiving module 262, configured to receive the data stream of the terminal that is sent by the security gateway, where the data stream is sent by the security gateway after the security gateway detects that the data stream is a trusted data stream; and
a data stream forwarding module 264, configured to forward the data stream to a target network.

To sum up, in the terminal authentication apparatus provided in this embodiment, when a MAC address of a terminal does not belong to a preset MAC address list, an authenticator sends a data stream of the terminal to a security gateway; after the security gateway detects whether the terminal is a trusted terminal, the security gateway instructs an authentication server to update a MAC address list, and after the MAC address list is updated, the authentication server sends a re-authentication indication to the authenticator, so that the authenticator re-authenticates the terminal. This resolves problems that normal monitoring is seriously affected due to the fact that a terminal that is not in a whitelist is directly not allowed to access a monitoring network, and a workload is heavy and operability is poor if MAC addresses of these terminals are detected one by one and added to the authentication server. Whether the terminal is a trusted terminal is detected according to the data stream of the terminal, the terminal accessing the monitoring network is allowed or rejected according to a detection result, and the MAC address of the terminal does not need to be manually added to the authentication server, thereby reducing the workload and enhancing the operability.

In the terminal authentication apparatus provided in this embodiment, two different triggering manners are further provided to trigger the authenticator to re-authenticate the terminal, so that this embodiment can adapt to different implementation scenarios, thereby improving applicability of this embodiment.

In the terminal authentication apparatus provided in this embodiment, a data stream that is sent by a security gateway when the data stream of the terminal is trusted is received, and the data stream is further forwarded to a target network, so that even though the MAC address of the terminal does not belong to the MAC address list, the terminal is still allowed to access the target network as long as the data stream of the terminal is a trusted data stream, thereby achieving that the terminal can also be normally connected to the target network in a process of detecting, by the security gateway, whether the terminal is a trusted terminal.

Referring to FIG. 4, which shows a structural block diagram of a terminal authentication apparatus according to an embodiment of the present invention, the terminal authentication apparatus may be implemented to be all or a part of the authentication server in FIG. 1 by using software, hardware, or a combination thereof. The terminal authentication apparatus includes:
an authentication receiving module 410, configured to receive a MAC address of a terminal that is sent by an authenticator;
an address authentication module 420, configured to authenticate the MAC address according to a preset MAC address list;
a result sending module 430, configured to: when the MAC address does not belong to the preset MAC address list, send, to the authenticator, an authentication result used to indicate that the MAC address of the terminal does not belong to the MAC address list;
an indication receiving module 440, configured to receive an indication sent by a security gateway, where the indication carries the MAC address of the terminal and an identifier indicating whether the terminal is a trusted terminal;
a list updating module 450, configured to update the MAC address list according to the indication sent by the security gateway; and
a packet sending module 460, configured to send, to the authenticator according to the indication sent by the security gateway, a re-authentication indication carrying the MAC address of the terminal, where the authenticator is configured to re-authenticate the terminal according to a re-authentication indication.

To sum up, in the terminal authentication apparatus provided in this embodiment, when a MAC address of a terminal does not belong to a preset MAC address list, an authenticator sends a data stream of the terminal to a security gateway; after the security gateway detects whether the terminal is a trusted terminal, the security gateway instructs an authentication server to update a MAC address list, and after the MAC address list is updated, the authentication server sends a re-authentication indication to the authenticator, so that the authenticator re-authenticates the terminal. This resolves problems that normal monitoring is seriously affected due to the fact that a terminal that is not in a whitelist is directly not allowed to access a monitoring network, and a workload is heavy and operability is poor if MAC addresses of these terminals are detected one by one and added to the authentication server. Whether the terminal is a trusted terminal is detected according to the data stream of the terminal, the terminal accessing the monitoring network is allowed or rejected according to a detection result, and the MAC address of the terminal does not need to be manually added to the authentication server, thereby reducing the workload and enhancing the operability.

In an optional embodiment provided based on FIG. 4, the packet sending module 460 is configured to send a first indication carrying the MAC address of the terminal to the authenticator. The first indication is used to trigger the authenticator to restart a network access port corresponding to the MAC address, and after the network access port is restarted, acquire the MAC address of the terminal according to the data stream of the terminal that is received again, and resend the MAC address of the terminal to the authentication server for authentication.

In an optional embodiment provided based on FIG. 4, the packet sending module 460 is configured to send a second indication carrying the MAC address of the terminal to the authenticator. The second indication is used to trigger the authenticator to cut off a connection corresponding to the MAC address, and after the connection is cut off, acquire the MAC address of the terminal according to the data stream of the terminal that is received again, and resend the MAC address of the terminal to the authentication server for authentication.

In an optional embodiment provided based on FIG. 4, the list updating module 450 is configured to:
when the indication sent by the security gateway carries an identifier indicating that the terminal is a trusted terminal, add the MAC address of the terminal to a MAC address list of a trusted terminal; or
when the indication sent by the security gateway carries an identifier indicating that the terminal is an untrusted terminal, add the MAC address of the terminal to a MAC address list of an untrusted terminal.

In the terminal authentication apparatus provided in this embodiment, two different triggering manners are further provided to trigger the authenticator to re-authenticate the terminal, so that this embodiment can adapt to different implementation scenarios, thereby improving applicability of this embodiment.

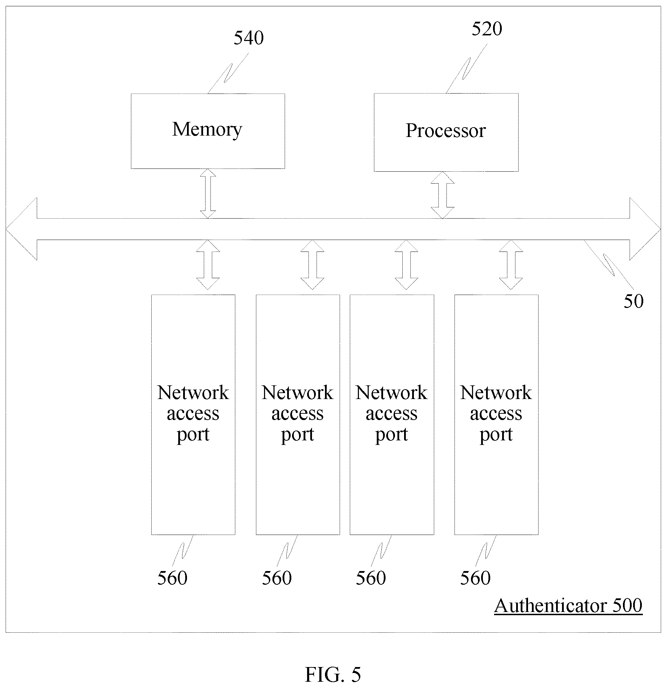

Referring to FIG. 5, which shows a structural block diagram of an authenticator 500 according to an embodiment of the present invention, the authenticator 500 includes: a processor 520, a memory 540, and a network access port 560.

The processor 520, the memory 540, and the network access port 560 may be connected by using a bus 50. Different network access ports 560 may be separately connected to a terminal, a security gateway, and an authentication server. The memory 540 may be a random-access memory (English: random-access memory, RAM for short), a read-only memory (English: read-only memory, ROM for short), a flash memory, or another solid-state memory technology. The memory 540 is configured to store one or more instructions, where the instruction is used to implement a terminal authentication method. The processor 520 is configured to perform the following operations according to the foregoing instruction:
the processor 520 is configured to receive a data stream from the terminal by using the network access port 560, and acquire a media access control MAC address of the terminal according to the data stream;
the processor 520 is configured to send the MAC address of the terminal to the authentication server by using the network access port 560;
the processor 520 is configured to receive an authentication result of the authentication server by using the network access port 560;
the processor 520 is configured to: when the authentication result indicates that the MAC address of the terminal does not belong to a preset MAC address list in the authentication server, send the data stream of the terminal to the security gateway by using the network access port 560; and
the processor 520 is configured to receive, by using the network access port 560, a re-authentication indication that is sent by the authentication server and carries the MAC address of the terminal, and re-authenticate the terminal according to the re-authentication indication.

To sum up, in the authenticator provided in this embodiment, when a MAC address of a terminal does not belong to a preset MAC address list, the authenticator sends a data stream of the terminal to a security gateway; after the security gateway detects whether the terminal is a trusted terminal, the security gateway instructs an authentication server to update a MAC address list, and after the MAC address list is updated, the authentication server sends a re-authentication indication to the authenticator, so that the authenticator re-authenticates the terminal. This resolves problems that normal monitoring is seriously affected due to the fact that a terminal that is not in a whitelist is directly not allowed to access a monitoring network, and a workload is heavy and operability is poor if MAC addresses of these terminals are detected one by one and added to the authentication server. Whether the terminal is a trusted terminal is detected according to the data stream of the terminal, the terminal accessing the monitoring network is allowed or rejected according to a detection result, and the MAC address of the terminal does not need to be manually added to the authentication server, thereby reducing the workload and enhancing the operability.

In an optional embodiment provided based on FIG. 5, the processor 520 is further configured to perform the following operations according to the foregoing instruction:
the processor 520 is configured to receive, by using the network access port 560, a first indication that is sent by the authentication server and carries the MAC address of the terminal, where the first indication is used to instruct to restart the network access port 560 corresponding to the MAC address; after the network access port is restarted, receive again the data stream of the terminal by using the network access port 560, and acquire the MAC address of the terminal according to the data stream of the terminal;
and resend, by using the network access port 560, the MAC address of the terminal to the authentication server for authentication.

In an optional embodiment provided based on FIG. 5, the processor 520 is further configured to perform the following operations according to the foregoing instruction:
the processor 520 is configured to receive, by using the network access port 560, a second indication that is sent by the authentication server and carries the MAC address, where the second indication is used to instruct to cut off a connection corresponding to the MAC address; after the connection is cut off, receive the MAC address of the terminal by using the network access port 560; and resend, by using the network access port 560, the MAC address of the terminal to the authentication server for authentication.

In an optional embodiment provided based on FIG. 5, the processor 520 is further configured to perform the following operations according to the foregoing instruction:
the processor 520 is configured to receive, by using the network access port 560, the data stream of the terminal that is sent by the security gateway, where the data stream is sent by the security gateway after the security gateway detects that the data stream is a trusted data stream; and
the processor 520 is configured to forward the data stream to a target network by using the network access port 560.

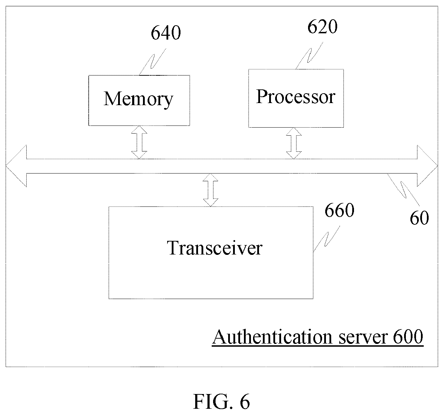

Referring to FIG. 6, which shows a structural block diagram of an authentication server according to an embodiment of the present invention, the authentication server 600 includes: a processor 620, a memory 640, and a transceiver 660, where the processor 620 and the memory 640 may be connected by using a bus 70. The memory 640 may be a RAM, a ROM, a flash memory, or another solid-state memory technology. The memory 640 is configured to store one or more instructions, where the instruction is used to implement a terminal authentication method. The processor 620 is configured to perform the following operations according to the foregoing instruction:
the processor 620 is configured to receive, by using the transceiver 660, a media access control MAC address of a terminal that is sent by an authenticator;
the processor 620 is configured to authenticate the MAC address according to a preset MAC address list;
the processor 620 is configured to: when the MAC address of the terminal does not belong to a MAC address list, send, to the authenticator, an authentication result used to indicate that the MAC address of the terminal does not belong to the MAC address list, where the authenticator is configured to send a data stream of the terminal to a security gateway, and the security gateway is configured to detect, according to the data stream of the terminal, whether the terminal is a trusted terminal;
the processor 620 is configured to receive, by using the transceiver 660, an indication sent by the security gateway, where the indication carries the MAC address of the terminal and an identifier indicating whether the terminal is a trusted terminal;
the processor 620 is configured to update the MAC address list according to the indication sent by the security gateway; and
the processor 620 is configured to send, to the authenticator by using the transceiver 660 according to the indication sent by the security gateway, a re-authentication indication carrying the MAC address of the terminal.

To sum up, in the authentication server provided in this embodiment, when a MAC address of a terminal does not belong to a preset MAC address list, an authenticator sends a data stream of the terminal to a security gateway; after the security gateway detects whether the terminal is a trusted terminal, the security gateway instructs the authentication server to update a MAC address list, and after the MAC address list is updated, the authentication server sends a re-authentication indication to the authenticator, so that the authenticator re-authenticates the terminal. This resolves problems that normal monitoring is seriously affected due to the fact that a terminal that is not in a whitelist is directly not allowed to access a monitoring network, and a workload is heavy and operability is poor if MAC addresses of these terminals are detected one by one and added to the authentication server. Whether the terminal is a trusted terminal is detected according to the data stream of the terminal, the terminal accessing the monitoring network is allowed or rejected according to a detection result, and the MAC address of the terminal does not need to be manually added to the authentication server, thereby reducing the workload and enhancing the operability.

In an optional embodiment provided based on FIG. 6, the processor 620 is further configured to perform the following operations according to the foregoing instruction:
the processor 620 is configured to send, by using the transceiver 660, a first indication carrying the MAC address of the terminal to the authenticator, where the first indication is used to trigger the authenticator to restart a network access port corresponding to the MAC address of the terminal, and after the network access port is restarted, acquire the MAC address of the terminal according to the data stream of the terminal that is received again, and resend the MAC address of the terminal to the authentication server for authentication; and
the processor 620 is configured to send, by using the transceiver 660, a second indication carrying the MAC address of the terminal to the authenticator, where the second indication is used to trigger the authenticator to cut off a connection corresponding to the MAC address, and after the connection is cut off, acquire the MAC address of the terminal according to the data stream of the terminal that is received again, and resend the MAC address of the terminal to the authentication server for authentication.

In an optional embodiment provided based on FIG. 6, the processor 620 is further configured to perform the following operations according to the foregoing instruction:
the processor 620 is configured to send, by using the transceiver 660, a second packet carrying the MAC address to the authenticator, where the authenticator is configured to perform, according to the second packet, a soft cutoff on the connection corresponding to the MAC address, and after the soft cutoff is performed on the connection, perform re-authentication according to the received MAC address of the terminal.

In an optional embodiment provided based on FIG. 6, the processor 620 is further configured to perform the following operations according to the foregoing instruction:
when the indication sent by the security gateway carries an identifier indicating that the terminal is a trusted terminal, adding the MAC address of the terminal to a MAC address list of a trusted terminal; or
when the indication sent by the security gateway carries an identifier indicating that the terminal is an untrusted terminal, adding the MAC address of the terminal to a MAC address list of an untrusted terminal.

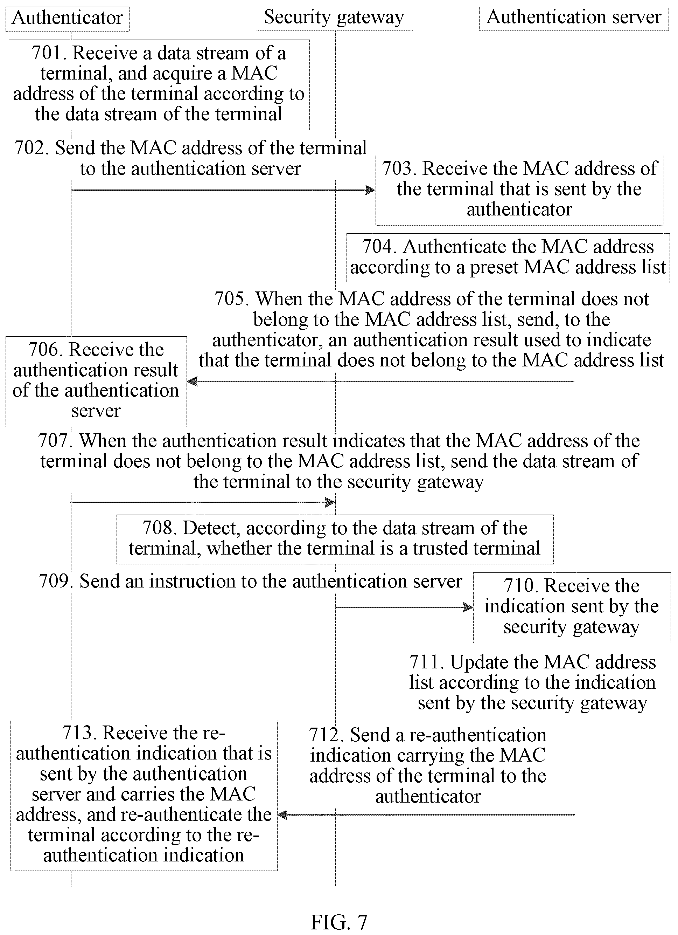

FIG. 7 shows a method flowchart of a terminal authentication method according to an embodiment of the present invention. This embodiment is described by using an example in which the terminal authentication method is applied to the network architecture shown in FIG. 1. The method includes:
Step 701. An authenticator receives a data stream of a terminal, and acquires a MAC address of the terminal according to the data stream of the terminal.
Step 702. The authenticator sends the MAC address of the terminal to an authentication server.
Step 703. The authentication server receives the MAC address of the terminal that is sent by the authenticator.
Step 704. The authentication server authenticates the MAC address according to a preset MAC address list.
Step 705. When the MAC address of the terminal does not belong to the preset MAC address list, the authentication server sends, to the authenticator, an authentication result used to indicate that the MAC address of the terminal does not belong to the MAC address list.
Step 706. The authenticator receives the authentication result of the authentication server.
Step 707. The authenticator sends the data stream of the terminal to a security gateway when the authentication result indicates that the MAC address of the terminal does not belong to the MAC address list.
Step 708. The security gateway detects, according to the data stream of the terminal, whether the terminal is a trusted terminal.
Step 709. The security gateway sends an indication to the authentication server.

The indication carries the MAC address of the terminal and an identifier indicating whether the terminal is a trusted terminal.

Step 710. The authentication server receives the indication sent by the security gateway.

Step 711. The authentication server updates the MAC address list according to the indication sent by the security gateway.

Step 712. The authentication server sends, to the authenticator according to the indication sent by the security gateway, a re-authentication indication carrying the MAC address of the terminal.

Step 713. The authenticator receives the re-authentication indication that is sent by the authentication server and carries the MAC address of the terminal, and re-authenticates the terminal according to the re-authentication indication.

To sum up, in the terminal authentication method provided in this embodiment, when a MAC address of a terminal does not belong to a preset MAC address list, an authenticator sends a data stream of the terminal to a security gateway; after the security gateway detects whether the terminal is a trusted terminal, the security gateway instructs an authentication server to update a MAC address list, and after the MAC address list is updated, the authentication server sends a re-authentication indication to the authenticator, so that the authenticator re-authenticates the terminal. This resolves problems that normal monitoring is seriously affected due to the fact that a terminal that is not in a whitelist is directly not allowed to access a monitoring network, and a workload is heavy and operability is poor if MAC addresses of these terminals are detected one by one and added to the authentication server. Whether the terminal is a trusted terminal is detected according to the data stream of the terminal, the terminal accessing the monitoring network is allowed or rejected according to a detection result, and the MAC address of the terminal does not need to be manually added to the authentication server, thereby reducing the workload and enhancing the operability.

It should be noted that step 701, step 702, step 706, step 707, and step 713 may be implemented to be a terminal authentication method on a side of the authenticator; and step 703, step 704, step 705, step 710, step 711, and step 712 may be implemented to be a terminal authentication method on a side of the authentication server.

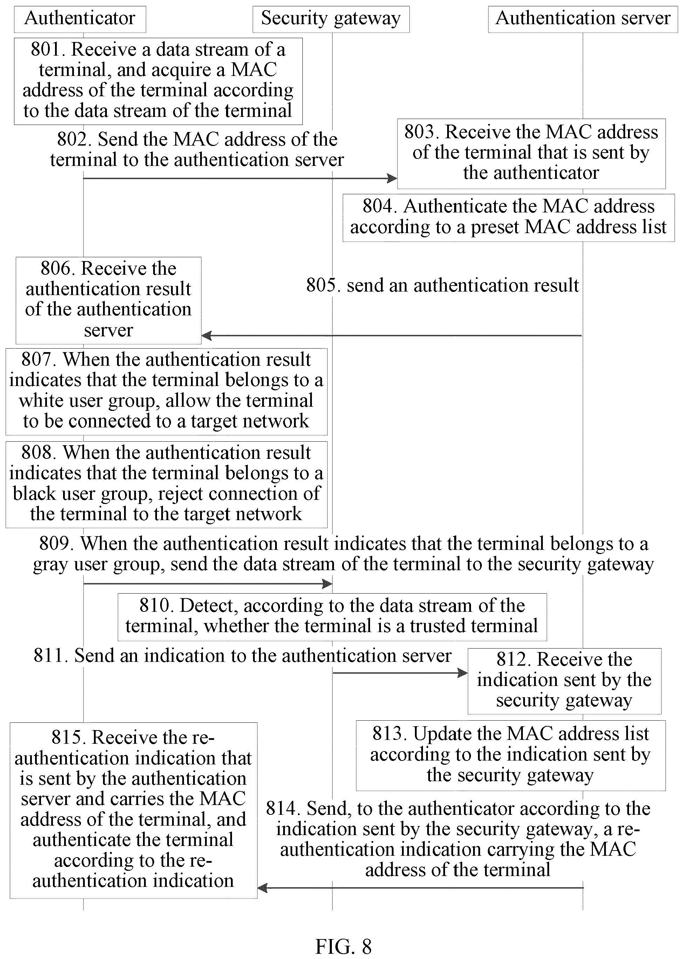

Referring to FIG. 8, which shows a method flowchart of a terminal authentication method according to another embodiment of the present invention, this embodiment is described by using an example in which the terminal authentication method is applied to the network architecture shown in FIG. 1. The method includes:
Step 801. An authenticator receives a data stream of a terminal, and acquires a MAC address of the terminal according to the data stream.

After the terminal establishes a physical connection to the authenticator, the terminal automatically sends a packet carrying the MAC address of the terminal to the authenticator. The authenticator extracts the MAC address of the terminal from the received packet.

Step 802. The authenticator sends the MAC address of the terminal to an authentication server.

Step 803. The authentication server receives the MAC address of the terminal that is sent by the authenticator.

Step 804. The authentication server authenticates the MAC address according to a preset MAC address list.

The preset MAC address list in the authentication server includes: a MAC address list of a trusted terminal.

Alternatively, the preset MAC address list includes: a MAC address list of an untrusted terminal.

Alternatively, the preset MAC address list includes: a MAC address list of a trusted terminal and a MAC address list of an untrusted terminal.

The MAC address list of the trusted terminal is also referred to as a whitelist; and the MAC address list of the untrusted terminal is also referred to as a blacklist. As an example, the MAC address list in the authentication server includes both the MAC address list of the trusted terminal and the MAC address list of the untrusted terminal:
If the MAC address of the terminal belongs to the MAC address list of the trusted terminal, an authentication result of the authentication server is that the terminal belongs to a white user group (English: white user group).

If the MAC address of the terminal belongs to the MAC address list of the untrusted terminal, an authentication result of the authentication server is that the terminal belongs to a black user group (English: black user group).

If the MAC address of the terminal neither belongs to the MAC address list of the trusted terminal nor belongs to the MAC address list of the untrusted terminal, an authentication result of the authentication server is that the terminal belongs to a grey user group (English: grey user group).

The grey user group is a user group to which a terminal belongs, where the authentication server cannot determine, according to the preset MAC address list, whether the terminal is a trusted terminal. That is, when a MAC address of a terminal does not belong to the preset MAC address list in the authentication server, the authentication server temporarily cannot determine whether the terminal is a trusted terminal, and the terminal is classified as belonging to the grey user group.

Step 805. The authentication server sends an authentication result to the authenticator.

If the MAC address of the terminal belongs to the MAC address list of the trusted terminal, the authentication server sends, to the authenticator, an authentication result used to indicate that the terminal belongs to the white user group.

If the MAC address of the terminal belongs to the MAC address list of the untrusted terminal, the authentication server sends, to the authenticator, an authentication result used to indicate that the terminal belongs to the black user group.

If the MAC address of the terminal neither belongs to the MAC address list of the trusted terminal nor belongs to the MAC address list of the untrusted terminal, that is, the MAC address of the terminal does not belong to the preset MAC address list, the authentication server send, to the authenticator, an authentication result used to indicate that the terminal belongs to the grey user group. In other words, the authentication server sends, to the authenticator, an authentication result used to indicate that the MAC address of the terminal does not belong to the preset MAC address list.

Step 806. The authenticator receives the authentication result of the authentication server.

Step 807. When the authentication result indicates that the terminal belongs to a white user group, the authenticator allows the terminal access a target network.

When the authentication result indicates that the terminal belongs to the white user group, the authenticator sets a network access port (English: network access port), used by the terminal, as a controlled port in an authenticated state, thereby allowing the terminal access the target network.

When the authenticator is a switch, and the terminal is a web camera, the network access port may be a physical port, connected to the web camera, in the switch.

Step 808. When the authentication result indicates that the terminal belongs to a black user group, the authenticator does not allow the terminal to access the target network.

When the authentication result indicates that the terminal belongs to the black user group, the authenticator sets the network access port, used by the terminal, as a controlled port in an unauthenticated state, thereby rejecting connection of the terminal to the target network.

Step 809. When the authentication result indicates that the terminal belongs to a grey user group, the authenticator sends the data stream of the terminal to a security gateway.

When the authentication result indicates that the terminal belongs to the grey user group, or in other words, the MAC address of the terminal does not belong to the preset MAC address list, because whether the terminal is in a trusted state is unknown, the authenticator sends the data stream of the terminal to the security gateway.

When a tunnel is established between the authenticator and the security gateway, the authenticator receives an instruction, a data packet, or a packet in the data stream of the terminal, and then sends the instruction, the data packet, or the packet to the security gateway by using the tunnel in a redirection manner.

The tunnel may be a Generic Routing Encapsulation (English: Generic Routing Encapsulation, GRE for short) tunnel.

As a possible implementation manner, three MAC address lists are set in the authenticator: a MAC address list of the white user group, a MAC address list of the black user group, and a MAC address list of the grey user group. The authenticator adds a MAC address of each terminal to one of the foregoing three lists according to the authentication result. The authenticator forwards a data stream of the terminal that belongs to the white user group to the target network according to a destination address of the data stream; for a data stream of the terminal that belongs to the black user group, the authenticator may discard the data stream, or send the data stream to an anti-virus server for analysis; the authenticator sends a data stream of the terminal that belongs to the grey user group to the security gateway in a redirection manner.

Step 810. The security gateway detects, according to the data stream of the terminal, whether the terminal is trusty.

A data stream behavior rule set is preset in the security gateway. The data stream behavior rule set includes:
a behavior rule of a trusted data stream, or
a behavior rule of an untrusted data stream, or
a behavior rule of a trusted data stream and a behavior rule of an untrusted data stream.

A behavior rule may be represented by one group of quintuple information, where one group of quintuple information includes at least one type of information of a source IP, a source port, a destination port, and a protocol.

For example, a behavior rule of a trusted data stream includes that: the source port is 5800, the destination port is 7080, and the protocol is a protocol A. If a data stream complies with the behavior rule, it is considered that the data stream is a trusted data stream.

The behavior rule may be represented in another form; for example, when an instruction issued by the terminal is an instruction for scanning or sniffing, it is considered that the data stream of the terminal is an untrusted data stream.

The data stream of the terminal refers to a data stream within predetermined duration, or a same data stream that includes n instructions, data packets, or packets, or different data streams that include n instructions, data packets, or packets. For example, the security gateway detects data streams of a terminal within 10 minutes, and then generates a detection result; for another example, the security gateway continuously detects 100 packets in a data stream of a terminal, and then generates a detection result.

It should be noted that there may be multiple implementation manners when the security gateway generates a detection result, for example:
1. When data streams of a terminal within a preset time period all match the behavior rule of the trusted data stream, the security gateway determines that the terminal is a trusted terminal.
2. When n consecutive instructions, data packets, or packets in a data stream of a terminal all match the behavior rule of the trusted data stream, the security gateway determines that the terminal is a trusted terminal, where n is a positive integer.
3. When a proportion of instructions, data packets, or packets, which match the behavior rule of the trusted data stream, in data streams of a terminal within a preset time period is greater than a first proportion, and no instruction, data packet, or packet in the data streams matches the behavior rule of the untrusted data stream, the security gateway determines that the terminal is a trusted terminal.
4. When a proportion of n consecutive instructions, data packets, or packets, which match the behavior rule of the trusted data stream, in a data stream of a terminal is greater than a second proportion, and none of the n consecutive instructions, data packets, or packets in the data stream matches the behavior rule of the untrusted data stream, the security gateway determines that the terminal is a trusted terminal, where n is a positive integer.
5. When any instruction, data packet, or packet in a data stream of a terminal matches the behavior rule of the untrusted data stream, the security gateway determines that the terminal is an untrusted terminal.
6. When a proportion of instructions, data packets, or packets, which match the behavior rule of the untrusted data stream, in data streams of a terminal within a preset time period is greater than a third proportion, the security gateway determines that the terminal is an untrusted terminal.
7. When a proportion of n consecutive instructions, data packets, or packets, which match the behavior rule of the untrusted data stream, in a data stream of a terminal is greater than a fourth proportion, the security gateway determines that the terminal is an untrusted terminal, where n is a positive integer.
8. When a proportion of instructions, data packets, or packets, which neither match the behavior rule of the trusted data stream nor match the behavior rule of the untrusted data stream, in data streams of a terminal within a preset time period is greater than a fifth proportion, the security gateway determines that the terminal is an untrusted terminal.
9. When a proportion of n consecutive instructions, data packets, or packets, which neither match the behavior rule of the trusted data stream nor match the behavior rule of the untrusted data stream, in a data stream of a terminal is greater than a sixth proportion, the security gateway determines that the terminal is an untrusted terminal, where n is a positive integer.

Herein, the first proportion, the second proportion, the third proportion, the fourth proportion, the fifth proportion, and the sixth proportion may be preset inside the security gateway.

Step 811. The security gateway sends an indication to the authentication server, where the indication carries the MAC address of the terminal and an identifier indicating whether the terminal is a trusted terminal.

The security gateway sends the indication to the authentication server according to a detection result. The indication carries the MAC address of the terminal and the identifier indicating whether the terminal is a trusted terminal.

Step 812. The authentication server receives the indication sent by the security gateway.

Step 813. The authentication server updates the MAC address list according to the indication sent by the security gateway.

When the indication sent by the security gateway carries an identifier indicating that the terminal is a trusted terminal, the authentication server adds the MAC address of the terminal to a MAC address list of a trusted terminal.

When the indication sent by the security gateway carries an identifier indicating that the terminal is an untrusted terminal, the authentication server adds the MAC address of the terminal to a MAC address list of an untrusted terminal.

Step 814. The authentication server sends, to the authenticator according to the indication sent by the security gateway, a re-authentication indication carrying the MAC address of the terminal.

This step may be implemented in either of the following two manners:
First, the authentication server sends a first indication carrying the MAC address of the terminal to the authenticator, where the first indication is used to instruct the authenticator to restart a network access port corresponding to the MAC address.
Second, the authentication server sends a second indication carrying the MAC address of the terminal to the authenticator, where the second indication is used to instruct the authenticator to cut off a connection corresponding to the MAC address.

Step 815. The authenticator receives the re-authentication indication that is sent by the authentication server and carries the MAC address of the terminal, and authenticates the terminal according to the re-authentication indication.

As a possible implementation manner, the authenticator receives a first indication that is sent by the authentication server and carries the MAC address of the terminal, where the first indication is used to instruct to restart a network access port corresponding to the MAC address. The authenticator restarts the network access port. After the network access port is restarted, the terminal automatically resends the data stream carrying the MAC address to the authenticator, and the authenticator receives the data stream of the terminal, acquires the MAC address of the terminal according to the data stream of the terminal, and resends the MAC address of the terminal to the authentication server for authentication.

As another possible implementation manner, the authenticator receives a second indication that is sent by the authentication server and carries the MAC address of the terminal, where the first indication is used to instruct to cut off a connection corresponding to the MAC address. The authenticator cuts off the connection. After the connection is cut off, the terminal automatically resends the data stream carrying the MAC address to the authenticator, and the authenticator receives the data stream of the terminal, acquires the MAC address of the terminal, and resends the MAC address of the terminal to the authentication server for authentication.

Subsequently, the authentication server authenticates the MAC address of the terminal according to the updated MAC address list, and for specific details, refer to descriptions of step 801 to step 806.

To sum up, in the terminal authentication method provided in this embodiment, when a MAC address of a terminal does not belong to a preset MAC address list, an authenticator sends a data stream of the terminal to a security gateway; after the security gateway detects whether the terminal is a trusted terminal, the security gateway instructs an authentication server to update a MAC address list, and after the MAC address list is updated, the authentication server sends a re-authentication indication to the authenticator, so that the authenticator re-authenticates the terminal. This resolves problems that normal monitoring is seriously affected due to the fact that a terminal that is not in a whitelist is directly not allowed to access a monitoring network, and a workload is heavy and operability is poor if MAC addresses of these terminals are detected one by one and added to the authentication server. Whether the terminal is a trusted terminal is detected according to the data stream of the terminal, the terminal accessing the monitoring network is allowed or rejected according to a detection result, and the MAC address of the terminal does not need to be manually added to the authentication server, thereby reducing the workload and enhancing the operability.

In the terminal authentication method provided in this embodiment, two different triggering manners are further provided to trigger the authenticator to re-authenticate the terminal, so that this embodiment can adapt to different implementation scenarios, thereby improving applicability of this embodiment.

It should be noted that step 801, step 802, step 806, step 807, step 808, step 809, and step 815 may be implemented to be a terminal authentication method on a side of the authenticator; and step 803, step 804, step 805, step 812, step 813, and step 814 may be implemented to be a terminal authentication method on a side of the authentication server.

It should be additionally noted that after step 810, the following steps may further be included:
Step 1. When detecting that the data stream of the terminal complies with the behavior rule of the trusted data stream, the security gateway sends the data stream to the authenticator.

The security gateway may resend the data stream complying with the behavior rule of the trusted data stream to the authenticator by using the tunnel.

Step 2. The authenticator receives the data stream of the terminal that is sent by the security gateway.

The data stream is sent by the security gateway after the security gateway detects that the data stream is a trusted data stream.

Step 3. The authenticator forwards the data stream to the target network.

Step 4. When detecting that the data stream of the terminal complies with the behavior rule of the untrusted data stream, the security gateway may discard the data stream or send the data stream to an anti-virus server for analysis.

To sum up, in the terminal authentication method provided in this embodiment, a data stream that is sent by a security gateway when the data stream of the terminal is trusted is received, and the data stream is further forwarded to a target network, so that even though the MAC address of the terminal does not belong to the MAC address list, the terminal is still allowed to access the target network as long as the data stream of the terminal is a trusted data stream, thereby achieving an effect that the terminal can be normally connected to the target network in a process of detecting, by the security gateway, whether the terminal is a trusted terminal.

A person of ordinary skill in the art may understand that all or a part of the steps in each of the foregoing method of the embodiments may be implemented by a program instructing a processor.

The foregoing program may be stored in a computer readable storage medium. The storage medium is a non-transitory (English: non-transitory) medium, and may be a random-access memory, read-only memory, a flash memory, a hard disk, a solid state drive, a magnetic tape (English: magnetic tape), a floppy disk (English: floppy disk), an optical disc (English: optical disc), or any combination thereof.

## Claims

1. An authentication server, wherein the authentication server comprises:
an authentication receiving module (410), configured to receive a media access control, MAC, address of a terminal that is sent by an authenticator;
an address authentication module (420), configured to authenticate the MAC address according to a preset MAC address list;
a result sending module (430), configured to: when the MAC address does not belong to the preset MAC address list, send, to the authenticator, an authentication result used to indicate that the MAC address of the terminal does not belong to the MAC address list;
**characterized in that**,
an indication receiving module (440), configured to receive an indication sent by a security gateway, after the security gateway detecting whether the terminal is a trusted terminal according to the data stream of the terminal, wherein the indication carries the MAC address of the terminal and an identifier indicating whether the terminal is a trusted terminal;
a list updating module (450), configured to update the MAC address list according to the indication sent by the security gateway; and
a packet sending module (460), configured to send, to the authenticator according to the indication sent by the security gateway, a re-authentication indication carrying the MAC address of the terminal.

2. The authentication server according to claim 1, wherein the list updating module is configured to:
when the indication carries an identifier indicating that the terminal is a trusted terminal, add the MAC address of the terminal to a MAC address list corresponding to a trusted terminal; or
when the indication carries an identifier indicating that the terminal is an untrusted terminal, add the MAC address of the terminal to a MAC address list of an untrusted terminal.

3. A terminal authentication method, wherein the method comprises:
receiving (701), by an authenticator, a data stream from a terminal, and acquiring a media access control, MAC, address of the terminal according to the data stream;
sending (702), by the authenticator, the MAC address of the terminal to an authentication server;
receiving (706), by the authenticator, an authentication result of the authentication server;
**characterized in that**,
when the authentication result indicates that the MAC address of the terminal does not belong to a preset MAC address list in the authentication server, sending (707) the data stream of the terminal to a security gateway;
detecting (708), by the security gateway, according to the data stream of the terminal, whether the terminal is a trusted terminal;
sending (709), by the security gateway, an indication to the authentication server, wherein the indication carries the MAC address of the terminal and an identifier indicating whether the terminal is a trusted terminal; and
receiving (712), by the authenticator, a re-authentication indication that is sent by the authentication server and carries the MAC address of the terminal, and re-authenticating the terminal according to the re-authentication indication.

4. The method according to claim 3, wherein the receiving a re-authentication indication that is sent by the authentication server and carries the MAC address of the terminal, and re-authenticating the terminal according to the re-authentication indication comprises:
receiving a first indication that is sent by the authentication server and carries the MAC address of the terminal, wherein the first indication is used to instruct to restart a network access port corresponding to the MAC address;
after the network access port is restarted, receiving again the data stream of the terminal, and acquiring the MAC address of the terminal according to the data stream; and
resending the MAC address of the terminal to the authentication server for authentication.

5. The method according to claim 3, wherein the receiving a re-authentication indication that is sent by the authentication server and carries the MAC address of the terminal, and re-authenticating, the terminal according to the re-authentication indication comprises:
receiving a second indication that is sent by the authentication server and carries the MAC address of the terminal, wherein the second indication is used to instruct to cut off a connection corresponding to the MAC address;
after the connection is cut off, receiving again the data stream of the terminal, and acquiring the MAC address of the terminal according to the data stream; and
resending the MAC address of the terminal to the authentication server for authentication.

6. A terminal authentication method, wherein the method comprises:
receiving (703), by an authentication server, a media access control, MAC, address of a terminal that is sent by an authenticator;
authenticating (704), by the authentication server, the MAC address according to a preset MAC address list;
when the MAC address does not belong to the MAC address list, sending (705), by the authentication server, to the authenticator, an authentication result used to indicate that the MAC address of the terminal does not belong to the MAC address list;
**characterized in that**,
receiving (710), by the authentication server, an indication sent by a security gateway, after the security gateway detecting whether the terminal is a trusted terminal according to the data stream of the terminal, wherein the indication carries the MAC address of the terminal and an identifier indicating whether the terminal is a trusted terminal;
updating (711), by the authentication server, the MAC address list according to the indication sent by the security gateway; and
sending (712), by the authentication server, to the authenticator according to the indication sent by the security gateway, a re-authentication indication carrying the MAC address of the terminal.

7. The method according to claim 6, wherein the updating the MAC address list according to the indication sent by the security gateway comprises:
when the indication carries an identifier indicating that the terminal is a trusted terminal, adding the MAC address of the terminal to a MAC address list of a trusted terminal; or
when the indication carries an identifier indicating that the terminal is an untrusted terminal, adding the MAC address of the terminal to a MAC address list of an untrusted terminal.

## Patentansprüche

1. Authentifizierungsserver, wobei der Authentifizierungsserver Folgendes umfasst:
ein Authentifizierungsempfangsmodul (410), das konfiguriert ist zum Empfangen einer Medienzugangssteuerungsadresse bzw. MAC-Adresse eines Endgeräts, die durch einen Authentifizierer gesendet wird;
ein Adressenauthentifizierungsmodul (420), das konfiguriert ist zum Authentifizieren der MAC-Adresse gemäß einer zuvor festgelegten MAC-Adressenliste;
ein Ergebnissendemodul (430), das, wenn die MAC-Adresse nicht zur zuvor festgelegten MAC-Adressenliste gehört, konfiguriert ist zum Senden, zum Authentifizierer, eines Authentifizierungsergebnisses, das zum Angeben, dass die MAC-Adresse des Endgeräts nicht zur MAC-Adressenliste gehört, verwendet wird;
**dadurch gekennzeichnet, dass**
ein Indikationsempfangsmodul (440) konfiguriert ist zum Empfangen einer Indikation, die durch ein Sicherheits-Gateway gesendet wird, nachdem das Sicherheits-Gateway detektiert, ob das Endgerät ein vertrauenswürdiges Endgerät ist, gemäß dem Datenstrom des Endgeräts, wobei die Indikation die MAC-Adresse des Endgeräts und eine Kennung, die angibt, ob das Endgerät ein vertrauenswürdiges Endgerät ist, führt;
ein Listenaktualisierungsmodul (450) konfiguriert ist zum Aktualisieren der MAC-Adressenliste gemäß der Indikation, die durch das Sicherheits-Gateway gesendet wird; und
ein Paketsendemodul (460) konfiguriert ist zum Senden, zum Authentifizierer gemäß der Indikation, die durch das Sicherheits-Gateway gesendet wird, einer Neuauthentifizierungsindikation, die die MAC-Adresse des Endgeräts führt.

2. Authentifizierungsserver nach Anspruch 1, wobei das Listenaktualisierungsmodul konfiguriert ist zum:
wenn die Indikation eine Kennung, die angibt, dass das Endgerät ein vertrauenswürdiges Endgerät ist, führt, Hinzufügen der MAC-Adresse des Endgeräts zu einer MAC-Adressenliste, die einem vertrauenswürdigen Endgerät entspricht; oder,
wenn die Indikation eine Kennung, die angibt, dass das Endgerät ein nicht vertrauenswürdiges Endgerät ist, führt, Hinzufügen der MAC-Adresse des Endgeräts zu einer MAC-Adressenliste eines nicht vertrauenswürdigen Endgeräts.

3. Endgeräteauthentifizierungsverfahren, wobei das Verfahren Folgendes umfasst:
Empfangen (701), durch einen Authentifizierer, eines Datenstroms von einem Endgerät und Erfassen einer Medienzugangssteuerungsadresse bzw. MAC-Adresse des Endgeräts gemäß dem Datenstrom;
Senden (702), durch den Authentifizierer, der MAC-Adresse des Endgeräts zu einem Authentifizierungsserver;
Empfangen (706), durch den Authentifizierer, eines Authentifizierungsergebnisses des Authentifizierungsservers;
**gekennzeichnet durch**,
wenn das Authentifizierungsergebnis angibt, dass die MAC-Adresse des Endgeräts nicht zu einer zuvor festgelegten MAC-Adressenliste im Authentifizierungsserver gehört, Senden (707) des Datenstroms des Endgeräts zu einem Sicherheits-Gateway;
Detektieren (708), durch das Sicherheits-Gateway, gemäß dem Datenstrom des Endgeräts, ob das Endgerät ein vertrauenswürdiges Endgerät ist;
Senden (709), durch das Sicherheits-Gateway, einer Indikation zum Authentifizierungsserver, wobei die Indikation die MAC-Adresse des Endgeräts und eine Kennung, die angibt, ob das Endgerät ein vertrauenswürdiges Endgerät ist, führt; und
Empfangen (712), durch den Authentifizierer, einer Neuauthentifizierungsindikation, die durch den Authentifizierungsserver gesendet wird und die MAC-Adresse des Endgeräts führt, und Neuauthentifizieren des Endgeräts gemäß der Neuauthentifizierungsindikation.

4. Verfahren nach Anspruch 3, wobei das Empfangen einer Neuauthentifizierungsindikation, die durch den Authentifizierungsserver gesendet wird und die MAC-Adresse des Endgeräts führt, und das Neuauthentifizieren des Endgeräts gemäß der Neuauthentifizierungsindikation Folgendes umfasst:
Empfangen einer ersten Indikation, die durch den Authentifizierungsserver gesendet wird und die MAC-Adresse des Endgeräts führt, wobei die erste Indikation zum Anweisen verwendet wird, einen Netzwerkzugangsanschluss, der der MAC-Adresse entspricht, neu zu starten;
nachdem der Netzwerkzugangsanschluss neu gestartet wird, erneutes Empfangen des Datenstroms des Endgeräts und Erfassen der MAC-Adresse des Endgeräts gemäß dem Datenstrom und
erneutes Senden der MAC-Adresse des Endgeräts zum Authentifizierungsserver zur Authentifizierung.

5. Verfahren nach Anspruch 3, wobei das Empfangen einer Neuauthentifizierungsindikation, die durch den Authentifizierungsserver gesendet wird und die MAC-Adresse des Endgeräts führt, und das Neuauthentifizieren des Endgeräts gemäß der Neuauthentifizierungsindikation Folgendes umfasst:
Empfangen einer zweiten Indikation, die durch den Authentifizierungsserver gesendet wird und die MAC-Adresse des Endgeräts führt, wobei die zweite Indikation zum Anweisen verwendet wird, eine Verbindung, die der MAC-Adresse entspricht, zu unterbrechen;
nachdem die Verbindung unterbrochen wird, erneutes Empfangen des Datenstroms des Endgeräts und Erfassen der MAC-Adresse des Endgeräts gemäß dem Datenstrom und
erneutes Senden der MAC-Adresse des Endgeräts zum Authentifizierungsserver zur Authentifizierung.

6. Endgeräteauthentifizierungsverfahren, wobei das Verfahren Folgendes umfasst:
Empfangen (703), durch einen Authentifizierungsserver, einer Medienzugangssteuerungsadresse bzw. MAC-Adresse eines Endgeräts, die durch einen Authentifizierer gesendet wird;
Authentifizieren (704), durch den Authentifizierungsserver, der MAC-Adresse gemäß einer zuvor festgelegten MAC-Adressenliste;
wenn die MAC-Adresse nicht zur zuvor festgelegten MAC-Adressenliste gehört, Senden (705), durch den Authentifizierungsserver zum Authentifizierer, eines Authentifizierungsergebnisses, das zum Angeben, dass die MAC-Adresse des Endgeräts nicht zur MAC-Adressenliste gehört, verwendet wird;
**gekennzeichnet durch**
Empfangen (710), durch den Authentifizierungsserver, einer Indikation, die durch ein Sicherheits-Gateway gesendet wird, nachdem das Sicherheits-Gateway detektiert, ob das Endgerät ein vertrauenswürdiges Endgerät ist, gemäß dem Datenstrom des Endgeräts, wobei die Indikation die MAC-Adresse des Endgeräts und eine Kennung, die angibt, ob das Endgerät ein vertrauenswürdiges Endgerät ist, führt;
Aktualisieren (711), durch den Authentifizierungsserver, der MAC-Adressenliste gemäß der Indikation, die durch das Sicherheits-Gateway gesendet wird; und
Senden (712), durch den Authentifizierungsserver zum Authentifizierer gemäß der Indikation, die durch das Sicherheits-Gateway gesendet wird, einer Neuauthentifizierungsindikation, die die MAC-Adresse des Endgeräts führt.

7. Verfahren nach Anspruch 6, wobei das Aktualisieren der MAC-Adressenliste gemäß der Indikation, die durch das Sicherheits-Gateway gesendet wird, Folgendes umfasst:
wenn die Indikation eine Kennung, die angibt, dass das Endgerät ein vertrauenswürdiges Endgerät ist, führt, Hinzufügen der MAC-Adresse des Endgeräts zu einer MAC-Adressenliste eines vertrauenswürdigen Endgeräts; oder,
wenn die Indikation eine Kennung, die angibt, dass das Endgerät ein nicht vertrauenswürdiges Endgerät ist, führt, Hinzufügen der MAC-Adresse des Endgeräts zu einer MAC-Adressenliste eines nicht vertrauenswürdigen Endgeräts.

## Revendications

1. Serveur d'authentification, comprenant :
un module de réception d'authentification (410), configuré pour recevoir une adresse de contrôle d'accès au support, MAC, d'un terminal qui est envoyée par un dispositif d'authentification ;
un module d'authentification d'adresse (420), configuré pour authentifier l'adresse MAC selon une liste d'adresses MAC préétablie ;
un module d'envoi de résultat (430), configuré pour : lorsque l'adresse MAC n'appartient pas à la liste d'adresses MAC préétablie, envoyer, au dispositif d'authentification, un résultat d'authentification utilisé pour indiquer que l'adresse MAC du terminal n'appartient pas à la liste d'adresses MAC ;
**caractérisé en ce que**,
un module de réception d'indication (440), configuré pour recevoir une indication envoyée par une passerelle de sécurité, après que la passerelle de sécurité a détecté si le terminal est un terminal fiable selon le flux de données du terminal, l'indication contenant l'adresse MAC du terminal et un identifiant indiquant si le terminal est un terminal fiable ;
un module de mise à jour de liste (450), configuré pour mettre à jour la liste d'adresses MAC selon l'indication envoyée par la passerelle de sécurité ; et
un module d'envoi de paquet (460), configuré pour envoyer, au dispositif d'authentification selon l'indication envoyée par la passerelle de sécurité, une indication de nouvelle authentification contenant l'adresse MAC du terminal.

2. Serveur d'authentification selon la revendication 1, dans lequel le module de mise à jour de liste est configuré pour :
lorsque l'indication contient un identifiant indiquant que le terminal est un terminal fiable, ajouter l'adresse MAC du terminal à une liste d'adresses MAC correspondant à un terminal fiable ; ou
lorsque l'indication contient un identifiant indiquant que le terminal est un terminal non fiable, ajouter l'adresse MAC du terminal à une liste d'adresses MAC d'un terminal non fiable.

3. Procédé d'authentification de terminal, comprenant :
recevoir (701), par un dispositif d'authentification, un flux de données à partir d'un terminal, et acquérir une adresse de contrôle d'accès au support, MAC, du terminal selon le flux de données ;
envoyer (702), par le dispositif d'authentification, l'adresse MAC du terminal à un serveur d'authentification ;
recevoir (706), par le dispositif d'authentification, un résultat d'authentification du serveur d'authentification ;
**caractérisé en ce que**,
lorsque le résultat d'authentification indique que l'adresse MAC du terminal n'appartient pas à une liste d'adresses MAC préétablie dans le serveur d'authentification, envoyer (707) le flux de données du terminal à une passerelle de sécurité ;
détecter (708), par la passerelle de sécurité, selon le flux de données du terminal, si le terminal est un terminal fiable ;
envoyer (709), par la passerelle de sécurité, une indication au serveur d'authentification, l'indication contenant l'adresse MAC du terminal et un identifiant indiquant si le terminal est un terminal fiable ; et
recevoir (712), par le dispositif d'authentification, une indication de nouvelle authentification qui est envoyée par le serveur d'authentification et qui contient l'adresse MAC du terminal, et authentifier à nouveau le terminal selon l'indication de nouvelle authentification.

4. Procédé selon la revendication 3, dans lequel les étapes consistant à recevoir une indication de nouvelle authentification qui est envoyée par le serveur d'authentification et qui contient l'adresse MAC du terminal, et à authentifier à nouveau le terminal selon l'indication de nouvelle authentification comprennent :
recevoir une première indication qui est envoyée par le serveur d'authentification et qui contient l'adresse MAC du terminal, la première indication étant utilisée pour ordonner de redémarrer un port d'accès réseau correspondant à l'adresse MAC ;
après que le port d'accès réseau a été redémarré, recevoir à nouveau le flux de données du terminal, et acquérir l'adresse MAC du terminal selon le flux de données ; et
renvoyer l'adresse MAC du terminal au serveur d'authentification pour une authentification.

5. Procédé selon la revendication 3, dans lequel les étapes consistant à recevoir une indication de nouvelle authentification qui est envoyée par le serveur d'authentification et qui contient l'adresse MAC du terminal, et à authentifier à nouveau le terminal selon l'indication de nouvelle authentification comprennent :
recevoir une deuxième indication qui est envoyée par le serveur d'authentification et qui contient l'adresse MAC du terminal, la deuxième indication étant utilisée pour ordonner de couper une connexion correspondant à l'adresse MAC ;
après que la connexion a été coupée, recevoir à nouveau le flux de données du terminal, et acquérir l'adresse MAC du terminal selon le flux de données ; et
renvoyer l'adresse MAC du terminal au serveur d'authentification pour une authentification.

6. Procédé d'authentification de terminal, comprenant :
recevoir (703), par un serveur d'authentification, une adresse de contrôle d'accès au support, MAC, d'un terminal qui est envoyée par un dispositif d'authentification ;
authentifier (704), par le serveur d'authentification, l'adresse MAC selon une liste d'adresses MAC préétablie ;
lorsque l'adresse MAC n'appartient pas à la liste d'adresses MAC, envoyer (705), par le serveur d'authentification, au dispositif d'authentification, un résultat d'authentification utilisé pour indiquer que l'adresse MAC du terminal n'appartient pas à la liste d'adresses MAC ;
**caractérisé en ce que**,
recevoir (710), par le serveur d'authentification, une indication envoyée par une passerelle de sécurité, après que la passerelle de sécurité a détecté si le terminal est un terminal fiable selon le flux de données du terminal, l'indication contenant l'adresse MAC du terminal et un identifiant indiquant si le terminal est un terminal fiable ;
mettre à jour (711), par le serveur d'authentification, la liste d'adresses MAC selon l'indication envoyée par la passerelle de sécurité ; et
envoyer (712), par le serveur d'authentification, au dispositif d'authentification selon l'indication envoyée par la passerelle de sécurité, une indication de nouvelle authentification contenant l'adresse MAC du terminal.

7. Procédé selon la revendication 6, dans lequel l'étape consistant à mettre à jour la liste d'adresses MAC selon l'indication envoyée par la passerelle de sécurité comprend :
lorsque l'indication contient un identifiant indiquant que le terminal est un terminal fiable, ajouter l'adresse MAC du terminal à une liste d'adresses MAC d'un terminal fiable ; ou
lorsque l'indication contient un identifiant indiquant que le terminal est un terminal non fiable, ajouter l'adresse MAC du terminal à une liste d'adresses MAC d'un terminal non fiable.
